**Europäisches Patentamt**

**European Patent Office**

**Office européen des brevets**

(19)

(11) **EP 1 517 133 A1**

(12) **EUROPEAN PATENT APPLICATION**

(43) Date of publication:
**23.03.2005 Bulletin 2005/12**

(51) Int Cl.⁷: **G01N 21/35**, G01N 21/71,
G01J 3/443, A61B 5/00

(21) Application number: **04255324.8**

(22) Date of filing: **02.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **19.09.2003 KR 2003065280**

(71) Applicant: **Samsung Electronics Co., Ltd.**
**Suwon-si, Gyeonggi-do (KR)**

(72) Inventors:
• **Potapov, Sergey**
**Suwon-si Gyeonggi-do (KR)**
• **Kovalev, Igor, Samsung Adv. Inst. of Tech.**
**Yongin-si Gyeonggi-do (KR)**

(74) Representative: **Ertl, Nicholas Justin**
**Elkington and Fife LLP,**
**Prospect House,**
**8 Pembroke Road**
**Sevenoaks, Kent TN13 1XR (GB)**

(54) **device and method for determining the presence of a substance of interest in a sample**

(57)     A chemical agent analysis system and a method thereof is capable of determining whether or not a sample contains a chemical component of interest. The chemical agent analysis system includes a sample (101), a first container (103) prepared as a reference of comparison, a second container (105) containing a chemical component which is an object of interest, a differential amplifier (107) for amplifying a difference of IR radiations transmitted through the first and the second containers, and a chemical agent analyzer (109) for collecting IR radiation from a surface of the sample, comparing a difference of the collected IR radiation and the amplified IR radiation from the differential amplifier, and analyzing to determine whether the sample contains the chemical component of interest.

## FIG. 1

**Description**

An apparatus consistent with the present invention relates to a chemical agent analysis system for analyzing a chemical agent of a sample and a method thereof and, more particularly, to a chemical agent analysis system and a method thereof for analyzing a chemical agent of a sample by analyzing a spectrum emission from the sample.

The problem of non-invasive remote identification of chemical agents and determination of their concentrations using emission spectroscopy has been successfully solved mainly for gaseous samples, and IR emission spectroscopy is usually applied in these cases. By analyzing the emission spectra of gaseous mixtures, it is possible to surely identify what chemicals (and often at what concentrations) are present in the volume under investigation. The emission technique also works equally well for large molecules such as $C_{60}$ and $C_{70}$, and for species ranging from DNA based to polycyclic aromatic hydrocarbons, in which the rotational structure is not resolved. For these molecules the solids are heated to about 200-300°C and emission from the vapor provides excellent spectra even in the far infrared region.

The IR emission spectroscopy works well for gases because they have simple, clear, distinguishable IR spectra with good line intensities and low continuum background. But when applied to condensed matter, analysis by IR emission spectroscopy has not been very successful.

IR spectra of liquids and solid materials have a complex, continuous shape. This is due to the fact that, for thick samples where thermal equilibrium between the matter and radiation is achieved, multiple scattering of infrared photons results in a nearly featureless black body spectrum that depends only on the temperature of the emitter. Also, when compared to gases, the intensity peaks for the condensed phase are much lower and broader. Thus, when the sample has many constituents, it is difficult to find the presence and concentration of some individual components by analyzing self-emission spectra. Thus, at this time, complex mathematical modeling and calibration are required.

However, there are only a few examples of practical applications of this approach and most of these examples relate to thin films, particles or thin layers on solid substrate. For thick samples, multiple scattering of infrared photons results in a nearly featureless black body spectrum.

Lately, some authors have developed IR emission spectroscopy technology for use in the semiconductor industry. For example, T. Niemczyk from the University of New Mexico, USA, has developed technology for in-situ quantitative analysis of borophosphosilicate glass (BPSG) thin films on silicon wafers during deposition process. By using Partial Least Square (PLS) analysis and emission spectra of 21 calibration samples, it was possible to determine the composition of these films with an accuracy better than 0.1% for boron and phosphorus.

Several other examples of the application of IR emission spectrometry in the investigation of adsorbed species can be found in literature. For example, emission spectra from carbon monoxide and $C_6D_6$ molecules adsorbed on single crystal surfaces of platinum were registered with a custom designed FTIR instrument operated at very low temperatures. The IR emission of the adsorbed species and the surface functional groups at elevated temperatures could be registered with a conventional spectrometer, and this method was applied for in-situ catalytic studies.

Methods for non-invasive determination of solution constituents are very important, especially in the field of medicine, and very different methodologies are used for these purposes. Mainly, they are different spectroscopic methods: near-infrared, mid-infrared, Raman, photo-acoustic, radio-wave and others. These methods work well when applied to extracted liquids with stabile time parameters. However, when measuring compositions in-vivo, a lot of problems are encountered. For example, there is no robust non-invasive commercial device to measure glucose or cholesterol levels in-vivo. The nature of these problems is mainly due to the complexity of real tissue composition, non-homogeneity, temperature instability and drift with time of many parameters. For handling these problems, complex mathematical modeling and algorithms like Partial Least-Squares (PLS), Artificial Neural Networks (ANN) or Hybrid Linear Analysis (HLA) should be used. However, these methods have not given satisfactory results to date. Differential analytical methods do not work well in these cases.

Many authors have already suggested using emission spectra of samples or tissues for analytical purposes. For example, in US Patent 5,515,847 use of mid-infrared emission radiation for the determination of glucose and alcohol concentrations in-vivo was proposed. The authors discovered that infrared radiation emitted by a person's tissue was partially reabsorbed by blood constituents, such as glucose, near the skin surface. Thus, the features of the emitted spectrum contained quantifiable information regarding the concentrations of blood constituents. So, in this case, the body is considered a source of infrared radiation, and the radiation is then partially absorbed by blood constituents such as glucose and others. This infrared spectrophotometer is supposed to measure absorption over a broadband range that is emitted as heat by a person. The authors supposed that, by measuring this absorption, it is possible to determine the constituent concentration. They suggested doing it at the artery side and synchronizing the measurements with the pulse.

However, the authors failed to take into account the fact that, due to the nature of black body radiation, when glucose or other constituents are at thermal equilibrium with the tissues emitting the IR radiation, then they do not absorb any IR energy. Hence, noticeable absorption spectra can only be obtained from the upper thin layers of tissues where thermal equilibrium is not achieved. Accordingly, one cannot assume that a noticeable absorption spectra superimposed on black body emission radiation can be obtained by such a method.

For this approach to work, it is necessary to find a way to control the temperature gradient between the inner tissues and the tissues close to the surface of the body. In US Patent No. 6,198,949 B1, the authors suggested a method to introduce a temperature gradient inside the body by cooling the surface of the skin. Because the cooled constituents absorb more than they emit, absorption spectra superimposed on the spectra of black body radiation could then be obtained. Two absorption spectra at different temperatures should be obtained to calculate the concentration of glucose. The concentration of glucose can be measured reasonably well with this method, achieving an accuracy of about 25mg/dl. This result is rather good but still insufficient for practical applications. The limitations of this method are the same as discussed above, namely the complexity of the absorption spectra for analysis.

Accordingly, there is a great demand in practice for implementation of some methods enabling remote non-invasive and fast monitoring of chemical compositions. Initially, it would be very good if devices were created that could differentiate at least some special chemicals from others. For example, these special chemicals could be explosives, narcotics or strong toxins. Fast, non-invasive remote express analyzers for these substances are in great demand in the market. Also, the importance of such devices for government structures should not be underestimated. Another possible application of such devices is in the field of waste utilization where detectors could quickly sort different types of plastics and non-plastics during processing.

One such device could be based on IR emission detectors. The biggest drawback of existing devices based on analyzing IR emission spectra is that a very good quality spectrophotometer having resolution around several inverse centimeters is needed. Thus, the price of these devices is high. These devices are also bulky and are sensitive to mechanical vibrations and temperature changes. In addition, the analysis procedure, itself, requires complex mathematical calculations and consumes a lot of time.

According to the invention, there is provided a chemical agent analysis system for testing a sample, comprising:

a first container prepared as a reference of comparison;
a second container containing a chemical component which is an object of interest;
a differential amplifier that amplifies a difference of IR radiations from the first and the second containers; and
a chemical agent analyzer that collects IR radiation from a surface of the sample, compares a difference of the collected IR radiation from the sample and the amplified IR radiation from the differential amplifier, and analyzes to determine whether the sample contains the chemical component of interest.

The invention thus provide an analysis system for analyzing a chemical agent in a sample that is capable of determining, through a non-invasive investigation, the presence of a chemical agent among a plurality of chemical constituents in the sample.

The second container may comprise a plurality of members for holding different chemical components of interest.

The first and the second containers may be realized in a single array. The differential amplifier amplifies the IR radiation emitted from one among the first and the second containers.

A linear variable filter may be provided between the sample and the chemical agent analyzer to increase a selectability with respect to the spectrum characteristics of the sample.

The chemical agent analyzer collects the IR radiation emitted from the surface of the sample within a range in which an optical axis is at 60-80 degrees to the normal of the surface of the sample.

The invention also provides a chemical agent analysis method, comprising:

collecting IR radiations emitted from a surface of a sample;
amplifying a difference between IR radiations which are transmitted through a first container and a second container, respectively, the first container being a reference of comparison, and the second container containing a chemical component as an object of interest; and
comparing a difference between the IR radiations transmitted through the first and the second containers, respectively, and analyzing this difference to determine whether the sample contains the chemical component of interest.

As a result, a chemical agent analyzer consistent with the present invention can determine the existence of a certain chemical component in the sample containing various chemical components through an indirect inspection.

The above and other features of the present invention will be readily apparent by describing, in detail, exemplary embodiments thereof with reference to the accompanying drawings, in which:

FIG. 1 is a view illustrating a chemical agent analysis system according to one example of the present invention;

FIGS. 2 and 3, respectively, are views for comparison of the transmission spectrum of 12.5 $\mu m$ polystyrene film and the emission spectra of this film registered at 10°C (B) and 40°C (A);

FIG. 4 is a view illustrating the result of experiments on the signal-to-background ratio obtained by collecting radiation emitted at angles from about 60° to about 80°;

FIGS. 5A, 5B and 5C are views for schematically showing an IR detector array according to the present invention, in which FIG. 5A is a side view of the IR detector array, FIG. 5B is a plan view of a single IR detector in the IR detector array, and FIG. 5C is a plan view of the IR detector array;

FIG. 6 is a side sectional view of the IR detector array of FIG. 5;

FIG. 7 is a plane view of the IR detector array of FIGS. 5A to 5C, illustrating the respective IR detectors containing different chemical agents therein;

FIGS. 8A and 8B are views for schematically illustrating an optical layout of a chemical agent detecting system consistent with the present invention, in which FIG. 8A shows a top view of an optical layout and FIG. 8B shows a side view; and

FIG. 9 is a flowchart illustrating the method of analyzing chemical agent according to the present invention.

An apparatus consistent with the present invention will now be described more fully with reference to the accompanying drawings, in which illustrative, non-limiting embodiments of the invention are shown.

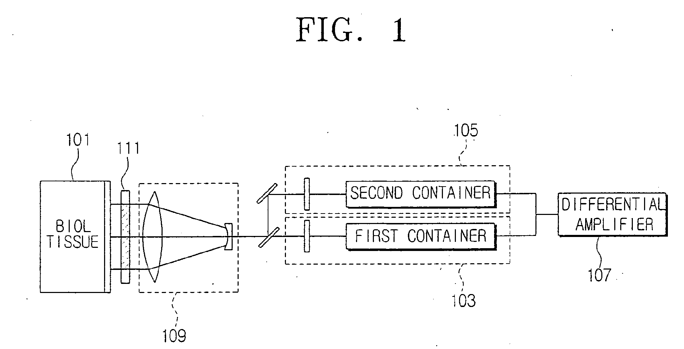

FIG. 1 is a view illustrating a chemical agent analysis system according to one example of the present invention. Referring to FIG. 1, the chemical agent analysis system comprises a sample 101, a first container 103, a second container 105, a differential amplifier 107, a chemical agent detector 109 and a variable filter 111.

The sample 101 is a chemical substance which is the object of the analysis, and may be prepared as a mixture of a plurality of chemical substances. The first container 103 is a reference of comparison, and contains the main chemical component of the sample 101. In the following description, it is assumed that the sample 101 is a liquid mixture containing water and other chemical components. If the main constituent of the sample 101 is water, the first container 103 contains water as the main chemical constituent and as a reference of comparison.

The second container 105 contains a chemical constituent of the sample 101, which is an object of interest. The term 'object of interest' refers to a chemical component that the analysis is intended to detect in the sample 101. Accordingly, if the object of interest is glucose, the second container 105 contains glucose to detect whether or not glucose is present in the sample 101.

The differential amplifier 107 amplifies the difference of the respective IR radiations from the first container 103 and the second container 105.

The chemical agent analyzer 109 collects the IR radiation emitted from the surface of the sample 101, compares it with the amplified difference of the IR radiations from the differential amplifier 107, and thus, analyzes to determine whether the chemical component of interest is there.

In the infrared emission properties of condensed matter (for example, body tissue in the case of in-vivo analysis), the temperature inside of the sample 101 is even, and the infrared emission spectra is very close to the featureless spectrum of ideal black body at the same temperature. This emission spectrum, which is related to the Plank function, depends only on the temperature of the emitter and can be expressed by the following mathematical formula:

[Formula 1]

$$H(\nu, T) = 2h\nu^3 / (c^2 (\exp(h\nu / kT) - 1))$$

where H is the monochromatic emittance of the black body (in units of watts per steradian per square meter of source per hertz of spectral bandwidth).

However, with respect to the infrared radiation emitted from the sample part located close to the surface, there is almost no thermal equilibrium between the matter and the radiation. In this case, Kirchhoff's law states that the emittance $\varepsilon$ of the sample 101 is equal to the absorptance $\alpha$. This means that all of the selection rules and optical properties of any material that are generally defined in terms of absorption relate directly to emission. Hence, Kirchhoff's law defines the monochromatic thermal emittance of the sample E(v, T) as:

[Formula 2]

$$E(\nu, T) = \varepsilon(\nu, T)H(\nu, T) = \alpha(\nu, T)H(\nu, t) = (1 - \tau(\nu, T))H(\nu, T)$$

Thus, the radiation emitted by the sample 101 (disregarding the fluorescence) has the same, but inverted features that the transmittance spectrum $\tau(\nu, T)$ possesses (just modulated by Planck's function). As the temperature increases, the amount of energy emitted at any wavelength increases also, and the wavelength of peak emission decreases. It should be noted that at ambient temperatures of 290-300 K, most of the thermal emission is concentrated within the 400-2000 cm$^{-1}$ frequency range, which corresponds to the so-called fingerprint mid-IR region. This makes it possible to identify substances and perform quantitative analysis with thermal self-emission of the sample at ambient temperatures.

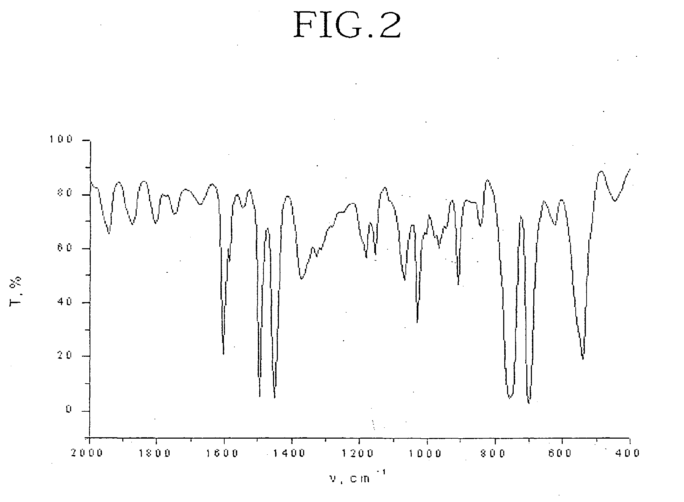

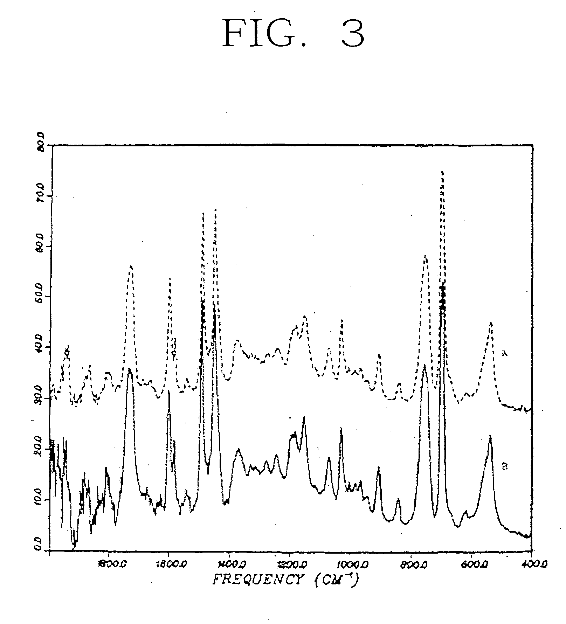

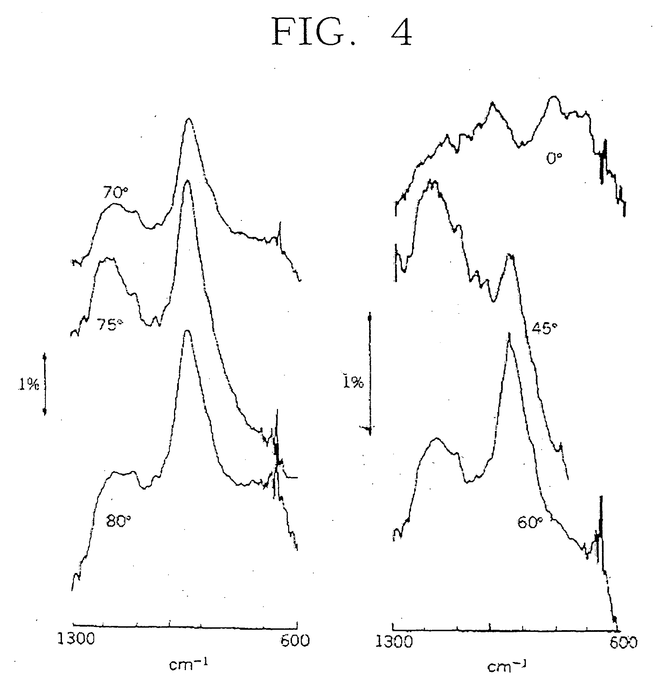

For condensed phases this characteristic non-equilibrium radiation is masked in most cases by multiple scattering of black body emission of the sample 101. However, when the condensed matter is in the form of a thin film, then this scattered black body emission background decreases significantly, and good emission spectra can be obtained. Examples of the emission and absorption spectra of polystyrene film at different temperatures are shown in FIGS. 2 and 3. Another example of good emission spectra is the emission spectra of oxides on the surface of metals, like aluminum or copper. Based on theoretical considerations, the best signal-to-background ratio in this case can be obtained by collecting the emitted radiation at an angle 60-80 degrees to the normal of the surface of the sample 101. This angle was confirmed experimentally by D. Kember, and the result of the experiment is shown in FIG. 4. Because the range of the optimal takeoff angles is rather large, good emission spectra can be obtained even for powdered samples.

Thus, by collecting the emitted radiation at large takeoff angles, 60-80 degrees, and if self-absorption is disregarded, the amplitude of emittance features should be proportional to the concentration of the corresponding components. Of course, due to the nature of condensed matter and the rather low intensity of self-emission, the intensity of these features is not high. Accordingly, the present invention adopts a method which is much simpler and more effective than the common differential spectroscopic approach. This method will be described in detail with reference to the case of glucose in body tissue.

Assuming both the concentration of dissolved glucose in body tissue and its variation are small, the following formula can be obtained:

[Formula 3]

$$\varepsilon\_sample(\nu, T) = \varepsilon\_water(\nu, T) + \varepsilon\_glucose(\nu, T) + ...$$

where $\varepsilon\_water(\nu, T) >> \varepsilon\_glucose(\nu, T)$.

Thus, the emission spectra of body tissue E(v,T) is essentially a superposition of the emission spectra of all the constituents. From formula 2 and Beer's law, we get:

[Formula 4]

$$E(\nu,\ T) \sim H(\nu,\ T)((1 - \tau_1(\nu, T))) + (1 - \tau_2(\nu,\ T) + ...)$$

$$= H(\nu, T)((1 - \exp(-k_1(\nu, T)1c_1)) + (1 - \exp(-k_2(\nu, T)1c_2) + ...)$$

where, 1 is the thickness of the sample 101, $c_i$ is the concentration of ith component and $k_i(\nu, T)$ is its normalized absorption spectrum (molar absorptivity).

For the simple case where the concentration of glucose in water is small, the concentration of the sample matrix (water) is almost constant, while the emission from the glucose is directly proportional to the product of its absorption spectrum and concentration. Hence, formula 4 can be reduced to:

[Formula 5]

$$E(\nu, T) \sim H(\nu, T)[Kk_2(\nu, T) + k_1(\nu, T)c_1]$$

where $Kk_2(\nu, T)$ is the emission from matrix (water), $k_1(\nu, T)$ and $k_2(\nu, T)$ are normalized absorption spectra of glucose and water, and $c_1$ is the concentration of glucose in the sample 101.

The emitted radiation is passed through two identical containers 103, 105. The first and the second containers 103, 105 are applied as filters. The first container 103 contains only water, while the second container 105 contains a solution of glucose in water. Thus, glucose is the object of interest in this embodiment. The radiation emitted by the sample 101 is absorbed by these solutions according to Beer's law, and the amount of energy transmitted $E_t$ through

and absorbed $E_a$ by these media could be expressed as follows:

[Formula 6]

$$E_{t,i}(v, T) = E(v,T)f_i(v,T) \sim H(v,T)f_i(v,T)[Kk_2(v,T) + k_1(v,T)c_1];$$

$$E_{a,i}(v,T) = E(v,T) - E_{t,i}(v,T) \sim H(v,T)(1 - f_i(v,T))[Kk_2(v,T) + k_1(v,T)c_1$$

where, $f_i(v, T)$ is the filter function for ith media, which expresses the ratio of energy transmitted through the filter to the incident energy:

[Formula 7]

$$f_i(v,T) = \exp(-a_1 k_1(v,T) - a_2 k_2(v,T))$$

$$f_2(v,T) = \exp(-a_2 k_2(v,T))$$

where $a_i$ is the corresponding coefficients for ith constituent of the filter- coefficients of glucose and water in the case of FIG. 1-, which are proportional to the concentration and the thickness of the filter.

A difference in energies transmitted through two filters (103, 105) or absorbed by two filters (103, 105) is:

m [Formula 8]

$$\delta E_t(v,T) = -\delta E_a(v,T) = E_{t,1}(v,T) - E_{t,2}(v,T) \sim$$

$$H(v,T)[Kk_2(v,T) + k_1(v,T)c_1](f_1(v,T) - f_2(v,T))$$

For thin filters,

$$(f_1(v,T) - f_2(v,T)) = \exp(-a_1 k_1(v,T) - a_2 k_2(v,T))$$

$$- \exp(-a_2 k_2(v,T)) \approx -a_1 k_1(v,T)$$

thus, in this case,

[Formula 9]

$$\delta E_t(v,T) = E_{t,1}(v,T) - E_{t,2}(v,T) \sim H(v,T)[Kk_2(v,T)$$

$$+ k_1(v,T)c_1](f_1(v,T) - f_2(v,T)) \sim$$

$$- H(v,T)[Kk_1(v,T)k_2(v,T) + (k_1(v,T))^2 c_1]$$

Next, for the given spectral interval $v_1, ..., v_2$ emitted by the sample 101, a difference in integral energy transmitted through the filter $\Delta E_t(v_1,v_2,T)$ or absorbed by the filter $\Delta E_a(v_1,v_2,T)$ can be written as:

[Formula 10]

$$\Delta E_t(v_1,v_2,T) = \Delta E_a(v_1,v_2,T) = \int_{v_1}^{v_2} \delta E_t(v,T)dv \sim$$

$$= K \int_{v_1}^{v_2} H(v,T)k_1(v,T)k_2(v,T)dv + c_1 \int_{v_1}^{v_2} H(v,T)(k_1(v,T))^2 dv$$

Thus, the difference in energies transmitted through these two filters (or absorbed by these filters) is proportional to the concentration of glucose with the square of its normalized absorption. This gives a coherent filter tuned to the emission bands of glucose.

With respect to the emission from water (the first term in equation 10), its value is proportional to the product of the normalized absorption of water and glucose. If an appropriate spectral interval $v_1$, ..., $v_2$, where spectra of water and glucose are highly anti-correlated, is chosen, the term

$$\int_{v_1}^{v_2} H(v,T)k_1(v,T)k_2(v,T)dv$$

could be small (zero in best case), and the variations in matrix emission cannot affect the overall signal. Such a spectral interval does not require high-resolution spectrometer and hence, could be easily done with a simple dispersive element like a linear variable filter.

In any intermediate case (when the absorption bands of glucose and water are overlapped to significant extent), measuring the difference in integral transmission (absorption) of the system at several spectral intervals $v_{1i}$, ..., $v_{2i}$ could help to eliminate any possible signal variations arising from variations in matrix emission.

Similar calculations may be performed for a mixture containing more than one component of interest at small concentrations. In this case, absorption of emitted radiation by several filters containing individual components of the mixture in an appropriate matrix can be measured. The overall energy emitted by the sample 101 is a sum of the matrix emission and the emissions from each individual component. The difference in energies transmitted through each pair of filters could be described with an equation similar to formula 10, but containing several terms that are proportional to the concentration of each individual component with an integral product of their normalized absorption includes:

[Formula 11]

$$A_{ij}(v_1,v_2,T) = \int_{v_1}^{v_2} H(v,T)k_1(v,T)k_2(v,T)dv .$$

By choosing such spectral intervals $v_{1i}$, ..., $v_{2i}$ where spectra of individual components are highly anti-correlated, some values of $A_{ij}(v_i,v_2,T)$ could be adjusted near zero, and the difference in transmitted (absorbed) energy becomes proportional to the concentration of an individual component.

Again, when the absorption spectra of individual components of the mixture are correlated to some extent, measurements could be performed at several spectral intervals $v_{1i}$, ..., $v_{2i}$ and the corresponding coefficients could be determined with standard samples of known composition. Then, each absorbing constituent of interest may be detected and quantified in the analyzed mixture (with some level of certainty) using common mathematical algorithms like Partial Least-Squares (PLS), Artificial Neural Networks (ANN) or Hybrid Linear Analysis (HLA).

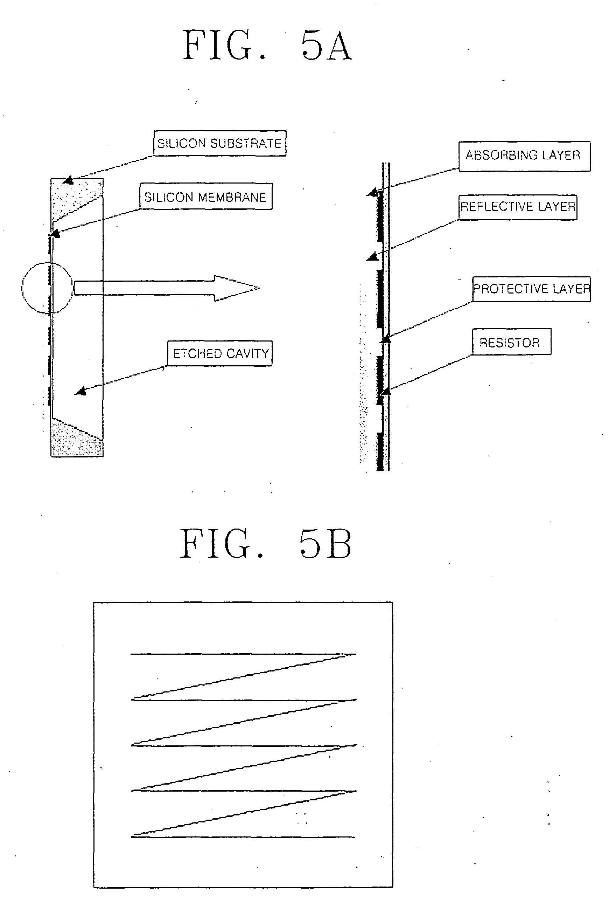

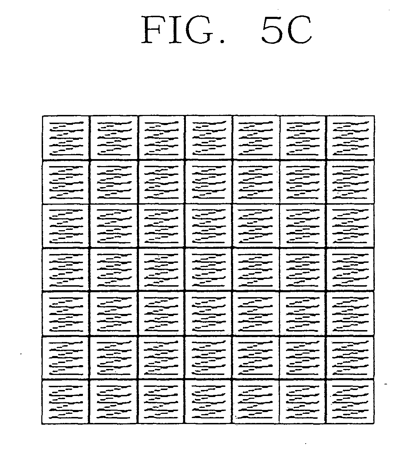

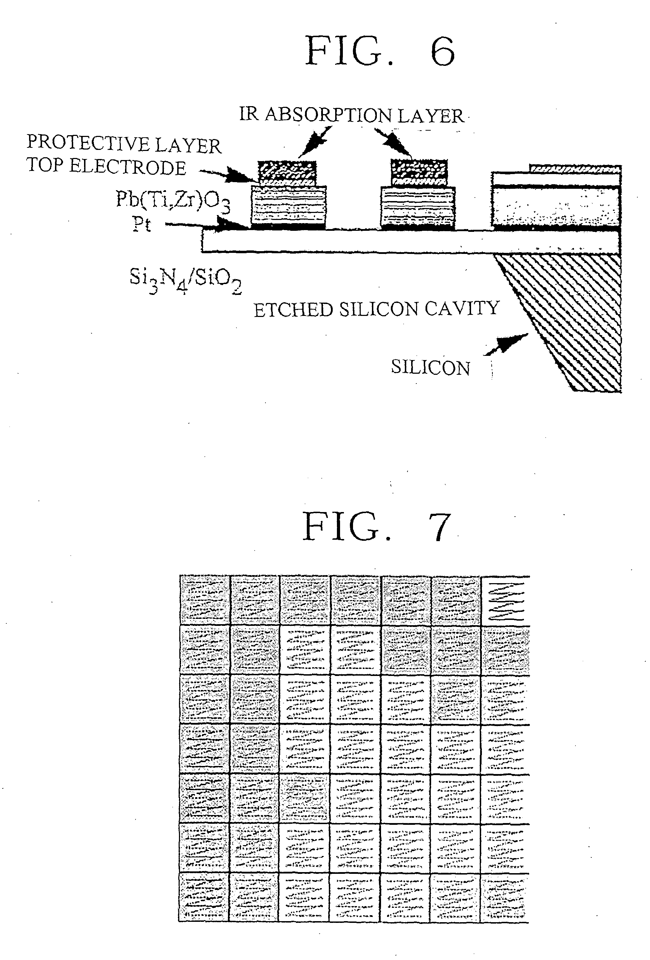

An instrument based on the principle described above can be realized conveniently based on MEMS technology using IR detector arrays consisting of high temperature semiconductor (HTSC) bolometers or other sensitive IR detectors (like quantum mercury-cadmium-telluride (MCT), InAs, InSb, PbSe, or pyroelectric, like deuterated triglycine sulfate (DTGS), lead zirconate-titanate (PZT) and so on). A sketch of this type of detector is given in FIGS. 5 to 7. More specifically, FIG. 5A is a side view of the IR detector array according to the present invention, FIG. 5B is a plan view of a single IR detector in the IR detector array, and FIG. 5C is a plan view of the IR detector array. FIG. 6 is a side sectional view of the IR detector array of FIG. 5, and FIG. 7 is a plan view of the IR detector array of FIG. 5, showing the respective IR detectors containing different chemical components.

One or several elements of the IR detector array should be coated with a layer of media having the composition and spectral properties similar to the sample matrix. These elements are then used as the reference channels. The other elements should be coated with layers of the same media but containing only one individual component of interest per each element. This combination forms a set of coherent filters that are naturally tuned for each component of interest. IR detector arrays as large as $1024 \times 1024$ sensitive elements are commercially available in array types of InSb or MCT. Thus, they are potentially capable of simultaneously monitoring $10^6$ constituents.

As shown in formula 9, by measuring the radiation transmitted through the filter or absorbed by the filter, it is possible to obtain quantifiable information about the composition of the sample 101. It should be noted, however, that for quantum detectors like MCT, InSb, PbSe or similar, only the detection of transmitted radiation is possible. In these cases, the detector should contain a transparent protective layer between the absorbing layer and the sensitive element. When HTSC bolometer array or pyroelectric array detectors like the popular DTGS, PZT or LiNbO3 are used, the detection of radiation absorbed by the filter is also possible. In these cases, the protective layer should reflect the incident radiation back through the absorbing layer, and both the absorbing and protecting (reflecting) layers should possess good thermo-conductivity.

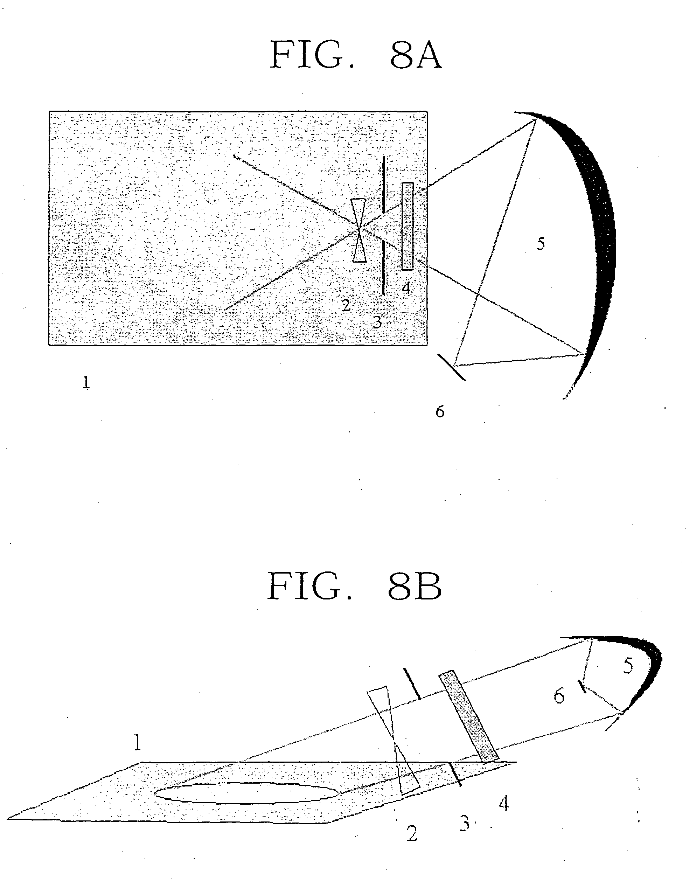

FIGS. 8A and 8B schematically illustrate a possible optical layout of the chemical agent analysis system 1 consistent with the present invention. FIG. 8A shows a top view of the optical layout and FIG. 8B shows a side view of the optical layout. The IR radiation emitted by the sample 101 is collected by low emission focusing mirror 5 (coated with aluminum or gold). The mirror 5 may be elliptic or cylindrical in the horizontal plane and parabolic in the vertical plane. An optimal takeoff angle of 60-80 degrees is selected with a variable aperture 3. The collected radiation is modulated with an optical chopper 2 to obtain a better signal to noise ratio. An additional dispersive element 4 (linear variable filter) may be introduced into the optical part of the beam. Then, the radiation is focused onto IR array detector 6 with coherent filters. The signal from the array detector 6 is processed with the appropriate electronics and software to identify the presence and quantify the components of interest.

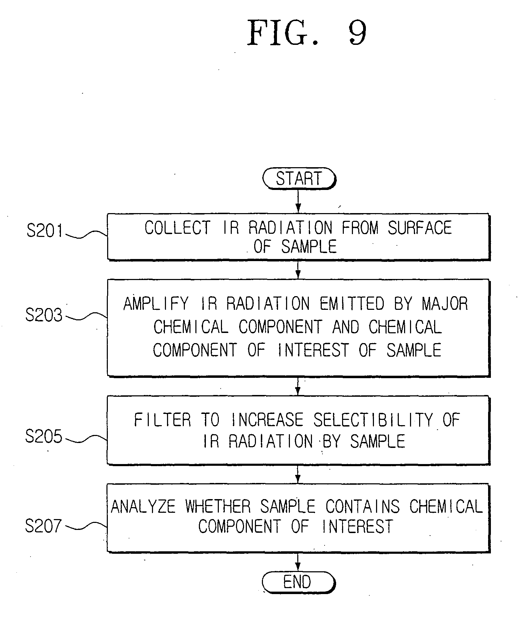

FIG. 9 is a flowchart illustrating the chemical agent analysis method by the chemical agent analysis system according to the present invention. The chemical agent analysis process can be summarized as follows:

The chemical agent analyzer 109 collects IR radiation from the surface of the sample 101 (S201). The IR radiation is passed through the first container 103 as the reference of comparison and also passed through the second container 105 containing the chemical component of interest. The difference between the IR radiation passed through the first and the second containers 105 is amplified by the differential amplifier 107 (S203). In the case where the sample 101 is a liquid mixture of water and glucose, the first container 103 may contain water and the second container 105 may contain glucose. In this case, in order to increase the selectability of the spectrum characteristics of the sample 101, the linear variable filter 111 may be disposed between the sample 101 and the chemical agent analyzer 109 (S205). The linear variable filter 111 helps to increase the selectability of the spectrum characteristics of the sample 101.

The chemical agent analyzer 109 compares the difference between the IR radiation collected from the sample 101 and the IR radiation amplified by the differential amplifier 107, and analyzes to determine whether the sample 101 contains the object of interest, i.e., whether the sample 101 contains glucose that is the same as that contained in the second container 105 (S207). The principle of analyzing the presence of the object of interest in the sample 101 is same as that described above.

Accordingly, remote non-invasive and fast monitoring of chemical composition of the sample 101 is enabled. Such chemical agent analysis method can be applied to various areas such as investigation at the airport for explosives, narcotics or strong toxins, or in the field of waste utilization, i.e., sorting different types of plastics and non-plastics during processing.

In conclusion, with the chemical agent analysis system and method thereof, one can quickly and easily determine whether the sample 101 contains the component of interest. The chemical agent analysis system and method can be applied to various areas such as investigation at the airport for explosives, narcotics or strong toxins, or in the field of waste utilization, i.e., sorting different types of plastics and non-plastics during processing.

Although a few exemplary embodiments of the present invention have been described, it will be understood by those skilled in the art that the present invention should not be limited to the described exemplary embodiments, but various changes and modifications can be made within the scope of the present invention as defined by the appended claims.

**Claims**

**1.** A chemical agent analysis system for testing a sample, comprising:

a first container prepared as a reference of comparison;

a second container containing a chemical component which is an object of interest;
a differential amplifier that amplifies a difference of IR radiations from the first and the second containers; and
a chemical agent analyzer that collects IR radiation from a surface of the sample, compares a difference of the collected IR radiation from the sample and the amplified IR radiation from the differential amplifier, and analyzes to determine whether the sample contains the chemical component of interest.

2. The chemical agent analysis system of claim 1, wherein the second container comprises a plurality of members for receiving different chemical components of interest.

3. The chemical agent analysis system of claim 1 or 2, wherein the first and the second containers are realized in a single array.

4. The chemical agent analysis system of any preceding claim, wherein the differential amplifier amplifies the difference between the IR radiations passed through the first and the second containers.

5. The chemical agent analysis system of any preceding claim, further comprising a linear variable filter disposed between the sample and the chemical agent analyzer to increase a selectability with respect to spectrum characteristics of the sample.

6. The chemical agent analysis system of any preceding claim, wherein the chemical agent analyzer collects the IR radiation emitted from the surface of the sample within a range in which an optical axis is at 60-80 degrees to the normal of the surface of the sample.

7. A chemical agent analysis method, comprising:

collecting IR radiations emitted from a surface of a sample;
amplifying a difference between IR radiations which are transmitted through a first container and a second container, respectively, the first container being a reference of comparison, and the second container containing a chemical component as an object of interest; and
comparing a difference between the IR radiations transmitted through the first and the second containers, respectively, and analyzing this difference to determine whether the sample contains the chemical component of interest.

8. The chemical agent analysis method of claim 7, wherein the second container comprises a plurality of members for receiving different chemical components of interest.

9. The chemical agent analysis method of claim 7 or 8, wherein the first and the second containers are realized in a single array.

10. The chemical agent analysis method of any one of claims 7 to 9, wherein, in the amplifying step, the difference of the IR radiations respectively transmitted through the first and the second containers, is amplified.

11. The chemical agent analysis method of any one of claims 7 to 10, further comprising the step of disposing a linear variable filter between the sample and the chemical agent analyzer to increase a selectability with respect to spectrum characteristics of the sample.

12. The chemical agent analysis method of any one of claims 7 to 11, wherein, in the IR radiation collecting step, collected is the IR radiation which is emitted from the surface of the sample within a range in which an optical axis is at 60-80 degrees to the normal of the surface of the sample.

# FIG. 1

# FIG.2

# FIG. 3

# FIG. 4

# FIG. 5A

SILICON SUBSTRATE

SILICON MEMBRANE

ETCHED CAVITY

ABSORBING LAYER

REFLECTIVE LAYER

PROTECTIVE LAYER

RESISTOR

# FIG. 5B

# FIG. 5C

# FIG. 6

IR ABSORPTION LAYER

PROTECTIVE LAYER
TOP ELECTRODE
$Pb(Ti,Zr)O_3$
Pt

$Si_3N_4/SiO_2$

ETCHED SILICON CAVITY

SILICON

# FIG. 7

# FIG. 8A

# FIG. 8B

# FIG. 9

```
                    ( START )
                        │
                        ▼
S201 ──⌐  ┌──────────────────────────────────┐
          │   COLLECT IR RADIATION FROM SURFACE │
          │            OF SAMPLE               │
          └──────────────────────────────────┘
                        │
                        ▼
S203 ──⌐  ┌──────────────────────────────────┐
          │ AMPLIFY IR RADIATION EMITTED BY MAJOR│
          │    CHEMICAL COMPONENT AND CHEMICAL  │
          │   COMPONENT OF INTEREST OF SAMPLE   │
          └──────────────────────────────────┘
                        │
                        ▼
S205 ──⌐  ┌──────────────────────────────────┐
          │   FILTER TO INCREASE SELECTIBILITY OF│
          │       IR RADIATION BY SAMPLE       │
          └──────────────────────────────────┘
                        │
                        ▼
S207 ──⌐  ┌──────────────────────────────────┐
          │ANALYZE WHETHER SAMPLE CONTAINS CHEMICAL│
          │      COMPONENT OF INTEREST         │
          └──────────────────────────────────┘
                        │
                        ▼
                    (  END  )
```

EP 1 517 133 A1

<table>
<tr><td colspan="2"></td><td>**European Patent Office**</td><td>**EUROPEAN SEARCH REPORT**</td><td>Application Number<br>EP 04 25 5324</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 128 797 A (SACHSE GLEN W ET AL) 7 July 1992 (1992-07-07) * column 4, line 1 - column 5, line 18; figure 5 * | 1,4,5 | G01N21/35 G01N21/71 G01J3/443 A61B5/00 |
| A | DE 198 27 554 A (SCHOTT GLAS) 30 December 1999 (1999-12-30) * page 3, lines 41-61; figure 1 * | 1-12 | |
| A | US 6 452 180 B1 (NISTLER JOHN L ET AL) 17 September 2002 (2002-09-17) * column 3, line 1 - column 5, line 26 * | 1-12 | |
| A | US 6 049 081 A (GOLDBERGER DANIEL S ET AL) 11 April 2000 (2000-04-11) * column 16, line 63 - column 22, line 62 * | 1-12 | |

TECHNICAL FIELDS SEARCHED (Int.Cl.7)

G01N
G01J
A61B

The present search report has been drawn up for all claims

| Place of search | Date of completion of the search | Examiner |
|---|---|---|
| Munich | 11 January 2005 | Hoogen, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 04 25 5324

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2005

| Patent document cited in search report | | Publication date | Patent family member(s) | | Publication date |
|---|---|---|---|---|---|
| US 5128797 | A | 07-07-1992 | NONE | | |
| DE 19827554 | A | 30-12-1999 | DE | 19827554 A1 | 30-12-1999 |
| US 6452180 | B1 | 17-09-2002 | EP | 1281201 A2 | 05-02-2003 |
| | | | WO | 0173819 A2 | 04-10-2001 |
| US 6049081 | A | 11-04-2000 | US | 5900632 A | 04-05-1999 |
| | | | AU | 6700498 A | 29-09-1998 |
| | | | WO | 9840724 A1 | 17-09-1998 |
| | | | US | 2004034291 A1 | 19-02-2004 |
| | | | US | 2003199742 A1 | 23-10-2003 |
| | | | US | 2004087841 A1 | 06-05-2004 |
| | | | US | 6556850 B1 | 29-04-2003 |
| | | | US | 6577885 B1 | 10-06-2003 |

EPO FORM P0459

For more details about this annex : see Official Journal of the European Patent Office, No. 12/82